# EUROPEAN PATENT APPLICATION

(11) **EP 4 585 039 A1**
(43) Date of publication of application: **16.07.2025**
(21) Application number: 23861770.8
(22) Date of filing: 07.09.2023
(51) Int. Cl.: A01K 61/00, A01K 61/50, A01K 61/54, A01K 61/55

(54) **DEVICE, SYSTEM AND METHOD FOR FARMING MOLLUSCS**

(30) Priority: 09.09.2022 CL 20222468
(71) Applicant: Golden Sea Spa, Concepción (CL)
(72) Inventor: WELNA, Hanna-Mirja, Concepción (CL); FAÚNDEZ APABLAZA, Victor Hugo, Concepción (CL)
(74) Representative: Gregorj S.r.l.
(86) International application number: PCT/CL2023/050083
(87) International publication number: WO 2024/050652

(57) **Abstract**

The present invention relates to the technical field of farming aquatic animals, such as bivalve mollusks, for example, oysters or scallops. In particular, the present invention provides a device, system and method for farming mollusks. This invention improves production efficiency in the farming of mollusks, mainly bivalve mollusks, by handling the movement of said mollusks and defining a specific area for each individual. This entails an improvement in individual survival, improving farming density and reducing loss caused by death.

## Description

### Technical field of invention

The present invention relates to the technical field of aquaculture, specifically the farming of aquatic animals, such as mollusks, for example, oysters, scallops, mussels, among others. In particular, the present invention provides a device, a system and a method for farming mollusks.

### Background of the invention

Chile is an important producer of mollusks worldwide, mainly mussels. Currently, there is particular interest in diversifying the production of mollusks towards other mollusks of higher commercial value such as clams, choro mussels, oysters, or scallops. Regarding the latter, in the state of the art there are different farming systems, mainly the Japanese system of lanterns to keep the individuals in captivity until their harvest. These lanterns consist of a tubular plastic net with separations or floors, in which scallops are placed for growth in the open sea.

For example, document EP2108256 describes a device for farming mollusks, in particular crustaceans, adapted to being suspended from a hawser anchored in the sea; said device is of the Japanese lantern type, comprising at least one tray, a support for mollusks to be reared, a tube-shaped net inside which said tray or the plurality of trays are arranged in an overlapping manner and, arranged at the level of each tray, means for keeping the net in contact with the tray so as to prevent the passage of mollusks between the net and the peripheral border of the tray, wherein each plate is free of borders and wherein the means for holding the net in contact with each tray are in the form of a frame surrounding said tray and having, on its inner periphery, a slot for inserting the peripheral border of said tray covered with the net, the sides of the slot comprising at least one zone of active support of the net on the surface called the upper part of the tray, the other, at least one zone of active support of the net on the surface called the lower part of said tray.

Moreover, document US2019159434 provides a device for aquaculture at sea comprising at least one stack of rearing enclosures, superimposed on top of each other in a longitudinal direction; blades linked to said rearing enclosures and arranged such that said rearing enclosures are rotated around a longitudinal axis by the sea current; a structure fixed to the seabed; and a rotary connection of each stack to said structure, comprising a member that allows a rotation of said stack relative to said structure around the longitudinal axis, wherein said stack is suspended from said structure by said rotary connection, said rotary connection being arranged to allow said stack to swing around a position where the longitudinal direction is vertical.

However, in the culture processes used in the state of the art it is necessary to change the lanterns according to the size of the cultivated individuals to avoid their loss, which involves the use of at least two different types of lanterns having different net pore opening sizes and excess manual labor. On the other hand, the final load in the harvest of mollusks is variable and is limited by the space available at each level, in addition to the freedom of each individual to move along the same, either by its own will or by wave movements; this free movement allows interaction between individuals, which generates potential damage to their soft parts and the subsequent death of mollusks, which results in a decrease in production efficiency.

Consequently, a system is required to improve production efficiency in the farming of mollusks, mainly mollusks belonging to the family *Pectinidae,* by handling their movement and defining a particular area for each individual; this entails improvement in individual survival, improving farming density and reducing losses caused by death.

### Summary of the Invention

The present invention provides a device for farming mollusks, characterized in that it comprises: a tray having a perforated surface (10) and a substantially rigid border placed on the perimeter of the tray; a plurality of farming cells (40) that are joined to said tray (10), wherein each of said cells is sized to accommodate an individual mollusk.

In a preferred embodiment, the device for farming mollusks is characterized in that the device is composed of a single piece comprising said tray (10) and said plurality of farming cells (40).

In a preferred embodiment, the device for farming mollusks is characterized in that fixing means join together said plurality of farming cells (40) with said tray (10), wherein said fixing means are preferably selected from the group consisting of synthetic glues, contact glues, screws, nails, staples, cable ties, plastic seals, and welding.

In a preferred embodiment, the device for farming mollusks is characterized in that a plurality of hollow cylinders which are axially perpendicular to the base of the tray is located on the perimeter of the tray.

In a preferred embodiment, the device for farming mollusks is characterized in that each cell (20) comprising the plurality of cells (40) is contiguously joined together with another cell (20), wherein the cells of said plurality of cells (40) may or may not be joined together contiguously by fixing means selected, preferably, from the group consisting of synthetic glues, contact glues, screws, nails, staples, cable ties, plastic seals, and welding.

In another preferred embodiment, the device for farming mollusks is characterized in that the perforated surface is a mesh or net. In another even more preferred embodiment, said perforated surface is substantially rigid.

In another preferred embodiment, the device for farming mollusks is characterized in that each cell (20) comprising the plurality of cells (40) is sized to accommodate an individual mollusk from its juvenile stage until its harvest.

In another preferred embodiment, the device for farming mollusks is characterized in that each cell (20) comprising the plurality of cells (40) has substantially rigid borders. In another preferred embodiment, said borders are perforated.

In another preferred embodiment, the device for farming mollusks is characterized in that said plurality of cells (40) is composed of a single piece of contiguous cells.

In another preferred embodiment, the device for farming mollusks is characterized in that the tray (10) and/or the cell (20) has a geometry that is preferably selected from the group consisting of circle, triangle, square, pentagon, hexagon, heptagon, octagon, decagon, or a combination thereof.

The device for farming mollusks or any of its preferred embodiments could be characterized in that preferably the mollusk belongs to the family *Pectinidae.* In another even more preferred embodiment, the mollusk is a scallop.

The present invention further provides a system for farming mollusks, which is characterized in that it comprises a plurality of devices for farming mollusks (1), either as the farming device (1) described herein or any of its preferred embodiments; wherein each of said devices (1) is arranged one above the other, forming a plurality of devices stacked on top of each other (50); and anchoring means (30) for connecting each of the devices (1) to each other.

In a preferred embodiment, the system for farming mollusks is characterized in that said anchoring means (30) are filiform elements.

In another preferred embodiment, the system for farming mollusks is characterized in that said anchoring means (30) cross each and every one of the stacked devices (50), wherein said anchoring means (30) could cross the stacked devices (50) through a plurality of hollow cylinders which are axially perpendicular to the base of the tray of each of the devices and which are located in the inner perimeter of the tray of each of the devices.

The system for farming mollusks or any of its preferred embodiments could be characterized in that said anchoring means (30) are grouped and tied up at the top of the system (4).

The system for farming mollusks or any of its preferred embodiments could be characterized in that preferably the mollusk belongs to the family *Pectinidae.* In another even more preferred embodiment, the mollusk is a scallop.

The present invention further provides a method for farming mollusks, which is characterized in that it comprises the steps of: providing a device for farming mollusk (1) according to the previously described device for farming mollusk or any of its preferred embodiments, or a system for farming mollusk (4) according to the previously described device for farming mollusks or any of its preferred embodiments; placing an individual mollusk inside each cell of the plurality of farming cells (40); and immersing the device (1) or the system (4) with the mollusks in the sea and allowing their growth until they reach the harvest size.

In a preferred embodiment, the method for farming mollusks is characterized in that once the mollusk reaches the appropriate size, the same is harvested from each cell of the plurality of cells (40).

The method for farming mollusks or any of its preferred embodiments could be characterized in that the mollusk belongs to the family *Pectinidae.* In an even more preferred embodiment, the mollusk is a scallop.

### BRIEF DESCRIPTION OF THE FIGURES

FIG. 1 illustrates an isometric view of a first embodiment of a system for farming mollusks (4), comprising a plurality of devices for farming mollusks (1), wherein each of said devices (1) is arranged one above the other, forming a plurality of devices stacked on top of each other (50), which are joined by an anchoring means (30).
FIG. 2 illustrates an isometric view of a first embodiment of a device (1) for farming mollusks.
FIG. 3 illustrates an isometric view of a first embodiment of a tray (10) that is part of the device (1) for farming mollusks.
FIG. 4 illustrates an isometric view of a preferred embodiment of a cell (20).
FIG. 5 illustrates an isometric view of a first embodiment of the plurality of cells (40) that are part of the device (1) for farming mollusks.
FIG. 6 illustrates an isometric view of an embodiment of the device (1) for farming mollusks, which is held in place by an anchoring means (30).
FIG. 7 illustrates a top view of a cell (20) containing a mollusk (6a, 6b, 6c) in its growth stage in a first embodiment of the method for farming mollusk.

### DETAILED DESCRIPTION OF THE INVENTION

Essentially, the present invention provides a device for farming mollusks (1), characterized in that it comprises:
- a tray with a perforated surface (10) and a substantially rigid border placed on the perimeter of the tray;
- a plurality of farming cells (40) which are joined to said tray (10), wherein each of said cells is sized to accommodate an individual mollusk.

In the context of the present invention, and without limiting the scope thereof, a tray shall be understood as a panel or flat piece having a surface on which an object is presented or placed.

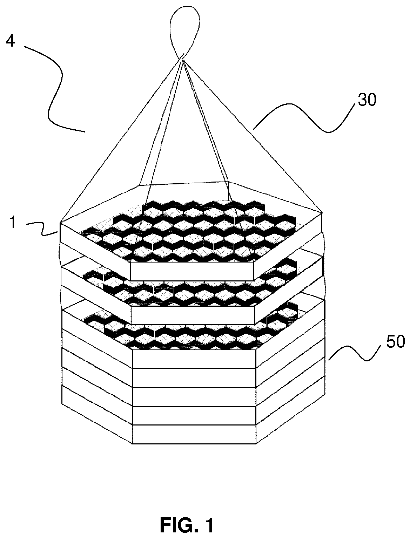

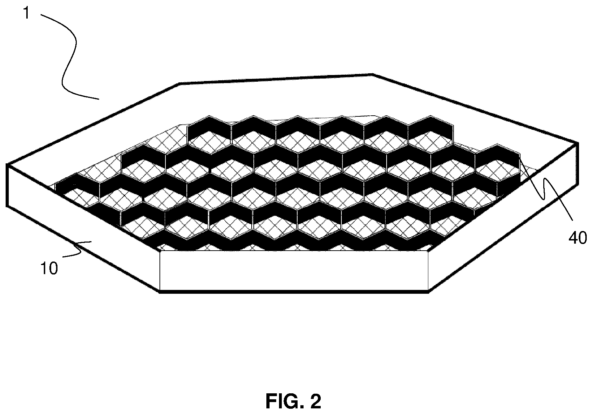

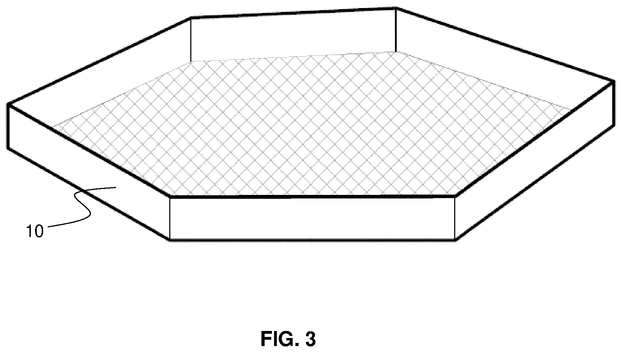

The tray (10) comprised in the device (1) corresponds to a surface that defines the farming area of the mollusks. The shape of the tray (10) comprised in the device is not a limiting characteristic of the present invention, which may be shaped, for example, as a circle, triangle, square, pentagon, hexagon, heptagon, octagon, decagon; without necessarily being limited to those listed above, and which can also have a regular or irregular shape. In a preferred embodiment, and without limiting the scope of the protection, the tray (10) comprised in the device (1) is hexagonal in shape; as can be seen in FIGs. 1 to 3.

Moreover, the material of the substantially rigid border and the perforated surface also do not limit the scope of the present invention. However, the perforations on the surface of the tray allow water to enter the cell more easily, and consequently come into contact with the body of the mollusk. In a preferred embodiment, and without limiting the scope of protection, said substantially rigid border is made of a metal alloy and said perforated inner surface is made of a polymeric material, wherein, without limiting the scope of protection, said polymeric material can be polyethylene or polypropylene. In an even more preferred embodiment, and without limiting the scope of protection, said perforated inner surface corresponds to a mesh or net. Additionally, the weave of said mesh or net, as well as its density, does not limit the scope of the present invention. In a preferred embodiment, and without limiting the scope of protection, said net or mesh has a regular quadrangular shaped weave, with a spacing of 10 mm. In another preferred embodiment, which is highly advantageous, and without limiting the scope of protection, said perforated inner surface is tightly tensioned and knotted at the ends to said substantially rigid border. In another preferred embodiment, a hole is located on the perimeter (either inner or outer) of said tray (10), which can be crossed by anchoring means, which allows to connect this device with other devices, or fasten it to a floating means, such as, for example, a buoy. In another preferred embodiment, a plurality of hollow cylinders that are axially perpendicular to the base of the tray (10) is placed on the perimeter (either inner or outer) of said tray (10), which can be crossed by anchoring means, which allows to connect this device with other devices, or fasten it to a flotation means, such as, for example, a buoy. Finally, the dimensions of the tray (10) comprised in said device also do not limit the scope of the present invention. In a preferred embodiment, and without limiting the scope of protection, the tray (10) comprised in said device has a width between 35 cm and 95 cm, preferably 58 cm, and a length between 35 cm and 95 cm, preferably 63 cm.

In the context of the present invention, and without limiting the scope thereof, a cell shall be understood as an enclosure, compartment or accommodation that defines or demarcates a volume.

Each of the cells (20) comprising said plurality of cells (40) are intended to segment the surface of a tray (10). The shape of each of the cells (20) comprising said plurality of cells (40) does not represent a limiting characteristic for the present invention, which may be shaped, for example, as a circle, triangle, square, pentagon, hexagon, heptagon, octagon, decagon, or a combination thereof; without necessarily being limited to those listed above, and which can also have a regular or irregular shape. In a preferred embodiment, and without limiting the scope of protection, each of the cells (20) comprising said plurality of cells (40) are hexagonal in shape; as can be seen in FIG. 1, FIG. 2, FIG. 4 and FIG. 5. On the other hand, the material of each of the cells (20) comprising said plurality of cells (40) also does not limit the scope of the present invention. In a preferred embodiment, and without limiting the scope of protection, each of the cells (20) comprising said plurality of cells (40) are of a polymer material.

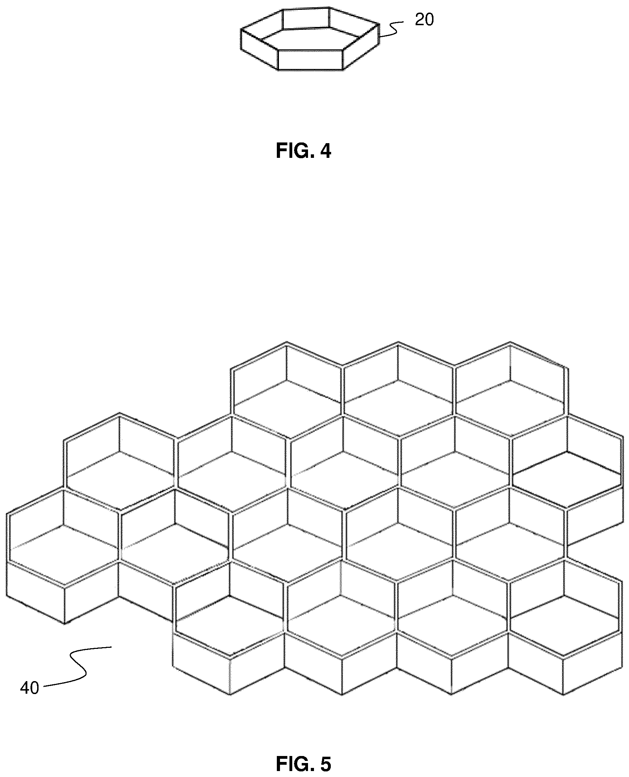

Moreover, the method of manufacturing said plurality of cells (40) does not limit the scope of the present invention. In a preferred embodiment, and without limiting the scope of protection, said plurality of cells (40) can be manufactured by the methods of 3D printing, extrusion, injection molding, blow molding, in a single piece, as shown in FIG 5. In an alternative preferred embodiment, and without limiting the scope of protection, each unit cell (20) can be manufactured by the methods of 3D printing, extrusion, injection molding, blow molding; as shown in FIG. 4, and they are joined together by fixing means.

In the context of the present invention, and without limiting the scope thereof, fixing means shall be understood as any technique, system, or mechanism that allows the connection of two or more cells. Wherein said fixing means are selected from the group consisting of: synthetic glues, contact glues, screws, nails, staples, cable ties, plastic seals, welding. Without being limited only to these, or even, they can be a mixture of those listed above.

In the context of the present invention, and without limiting the scope thereof, said device is composed of a single piece comprising said tray (10) and said plurality of cells (20). Without limiting the scope of the present invention, said piece can be manufactured by the methods of 3D printing, extrusion, injection molding, blow molding.

In the context of the present invention, and without limiting the scope thereof, said tray (10) and said plurality of cells (20) can be joined together using fixing means, wherein said fixing means are selected from the group consisting of synthetic glues, contact glues, screws, nails, staples, cable ties, plastic seals, and welding.

The dimensions of each of the cells (20) do not limit the scope of the present invention, however, they are established in advance by the aquaculture specialist and will depend on the species and the size desired for each mollusk, as long as they allow to accommodate an individual mollusk from juvenile stage until its harvest. In a preferred embodiment, and without limiting the scope of protection, it is estimated that the optimal size of each cell (20) is between 7 cm and 15 cm wide, 7 cm and 15 cm long, and 4 cm and 9 cm high for mollusks such as those belonging to the family *Pectinidae.*

The family *Pectinidae,* and without limiting the scope of the present invention, includes the following species: *Adamussium colbecki, Aequipecten acanthodes, Aequipecten glyptus, Aequipecten muscosus, Aequipecten opercularis, Amusium japonicum, Amusium laurenti, Amusium papyraceum, Amusium pleuronectes, Annachlamys flabellata, Annachlamys macassarensis, Argopecten gibbus, Argopecten irradians, Argopecten lineolaris, Argopecten nucleus, Argopecten purpuratus, Argopecten ventricosus, Bractechlamys antillarum, Bractechlamys vexillum, Caribachlamys imbricata, Caribachlamys mildredae, Caribachlamys ornata, Caribachlamys sentis, Chlamys albida, Chlamys behringiana, Chlamys delicatula, Chlamys farreri, Chlamys hastata, Chlamys islandica, Chlamys nobilis, Chlamys rubida, Chlamys squamata, Crassadoma gigantea, Crassedoma giganteum, Cryptopecten phrygium, Decatopecten amiculum, Decatopecten plica, Decatopecten radula, Delectopecten randolphi, Delectopecten vancouverensis, Delectopecten vitreus, Euvola marensis, Euvola raveneli, Euvola ziczac, Excellichlamys spectabilis, Flexopecten glaber, Flexopecten hyalinus, Gloripallium pallium, Haumea juddi, Laevichlamys multisquamata, Laevichlamys squamosa, Leopecten sericeus, Leptopecten bavayi, Lindapecten exasperatus, Lindapecten muscosus, Lyropecten kallinubilosus, Manupecten pesfelis, Mesopeplum convexum, Mimachlamys sanguinea, Mimachlamys varia, Minnivola pyxidata, Mizuhopecten yessoensis, Nodipecten nodosus, Nodipecten subnodosus, Palliolum striatum, Patinopecten caurinus, Pecten chazaliei, Pecten jacobaeus, Pecten maximus, Pecten novaezelandiae, Pedum spondyloideum, Placopecten magellanicus, Semipallium tigris, Spathochlamys benedicti, Spathochlamys vestalis, Talochlamys multistriata, Talochlamys zelandiae, Volachlamys hirasei, Volachlamys singaporina, Zygochlamys patagonica.*

The present invention further provides a system for farming mollusks (4), characterized in that it comprises:
- a plurality of devices for farming mollusks (1), as described above, either as a device for farming mollusks (1) or any of its preferred embodiments; wherein each of said devices (1) is arranged one above the other, forming a plurality of devices stacked one on top of the other (50); and
- anchoring means (30) for joining together each of the devices (1).

In the context of the present invention, and without limiting the scope thereof, a plurality of devices for farming mollusks (1) shall be understood as devices arranged one above the other. This restricts the vertical movement of the system (4), caused by the waves or external forces.

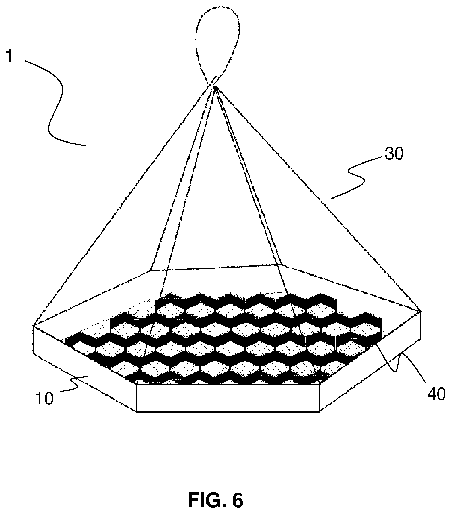

In the context of the present invention, and without limiting the scope thereof, anchoring means shall be understood as any element or system that allows the connection or fixing of two or more elements. The anchoring means (30) are meant to provide stability to the stacking of the devices for farming mollusks (1) at all levels of the system (4), as well as to restrict the horizontal movement of the system (1), caused by the waves or external forces. The type of anchoring does not represent a limiting feature for the present invention. In a preferred embodiment, and without limiting the scope of protection, said anchoring means (30) are filiform elements that externally restrain said plurality of devices (50), as shown in FIG. 1. In another preferred embodiment, and without limiting the scope of protection, said anchoring means (30) cross each and every device (1) of the system. In another preferred embodiment, and without limiting the scope of protection, said anchoring media (30) cross each and every device of the system through a plurality of hollow cylinders that are axially perpendicular to the base of the tray of each device, and which are located on the inner perimeter of the tray of each device. In an even more preferred embodiment, which is particularly advantageous, the ends of said anchoring means (30) are grouped and tied up at the top of the system; as can be seen in FIG. 1 and FIG 6. Said anchoring means could cross a central perforation of the trays (20) comprising the devices that are part of the system, however, the preferred embodiment is the one previously mentioned. In another preferred embodiment, said anchoring means (30) are cords or ropes. The material of said anchoring means (30) also does not limit the scope of the present invention. In a preferred embodiment, and without limiting the scope of protection, said anchoring means (30) are made of braided polypropylene or polyethylene.

The present invention further provides a method for farming mollusks comprising the steps of:
a) providing a device for farming mollusks (1) either as a device for farming mollusks (1) or any of its preferred embodiments, or a system for farming mollusks (4) either as a system for farming mollusks (1) or any of its preferred embodiments;
b) placing an individual mollusk inside each cell of the plurality of farming cells (40); and
c) immersing the device (1) or the system (4) with the mollusks into the sea and allowing their growth until they reach harvest size.

In the context of the present invention, and without limiting the scope thereof, an individual shall be understood as a living being, in this case a mollusk, considered as a being that is independent of others. That is, it will be used mainly to refer to the mollusk unit.

In a preferred embodiment, and without limiting the scope of the invention, the mollusk is a bivalve mollusk (also referred to as lamellibranchiate or pelecypods). In a preferred embodiment, the method of the present invention allows the farming of different species of mollusks, such as oysters (e.g. Chilean oyster and Japanese oyster), scallops (e.g., northern scallop), clams, giant scallops, among other species that can be found within the family *Pectinidae,* such as, for example, the species *Adamussium colbecki, Aequipecten acanthodes, Aequipecten glyptus, Aequipecten muscosus, Aequipecten opercularis, Amusium japonicum, Amusium laurenti, Amusium papyraceum, Amusium pleuronectes, Annachlamys flabellata, Annachlamys macassarensis, Argopecten gibbus, Argopecten irradians, Argopecten lineolaris, Argopecten nucleus, Argopecten purpuratus, Argopecten ventricosus, Bractechlamys antillarum, Bractechlamys vexillum, Caribachlamys imbricata, Caribachlamys mildredae, Caribachlamys ornata, Caribachlamys sentis, Chlamys albida, Chlamys behringiana, Chlamys delicatula, Chlamys farreri, Chlamys hastata, Chlamys islandica, Chlamys nobilis, Chlamys rubida, Chlamys squamata, Crassadoma gigantea, Crassedoma giganteum, Cryptopecten phrygium, Decatopecten amiculum, Decatopecten plica, Decatopecten radula, Delectopecten randolphi, Delectopecten vancouverensis, Delectopecten vitreus, Euvola marensis, Euvola raveneli, Euvola ziczac, Excellichlamys spectabilis, Flexopecten glaber, Flexopecten hyalinus, Gloripallium pallium, Haumea juddi, Laevichlamys multisquamata, Laevichlamys squamosa, Leopecten sericeus, Leptopecten bavayi, Lindapecten exasperatus, Lindapecten muscosus, Lyropecten kallinubilosus, Manupecten pesfelis, Mesopeplum convexum, Mimachlamys sanguinea, Mimachlamys varia, Minnivola pyxidata, Mizuhopecten yessoensis, Nodipecten nodosus, Nodipecten subnodosus, Palliolum striatum, Patinopecten caurinus, Pecten chazaliei, Pecten jacobaeus, Pecten maximus, Pecten novaezelandiae, Pedum spondyloideum, Placopecten magellanicus, Semipallium tigris, Spathochlamys benedicti, Spathochlamys vestalis, Talochlamys multistriata, Talochlamys zelandiae, Volachlamys hirasei, Volachlamys singaporina, Zygochlamys patagonica.* In an even more preferred embodiment, the method allows the optimal farming of scallops.

Being a system that is installed underwater, it is prone to accumulate different algae or species typical of this environment. That is why, in a preferred embodiment, the method for farming mollusks comprises the step of emerging the device (1) or the system (4) for washing. The washing system used does not limit the scope of the present invention. In a preferred embodiment, and without limiting the scope of protection, said washing system is through high pressure water propulsion. In an even more preferred embodiment, said high pressure water propulsion is carried out by means of a pressure washer. In another preferred embodiment, the device (1) or system (4) is washed using a brush.

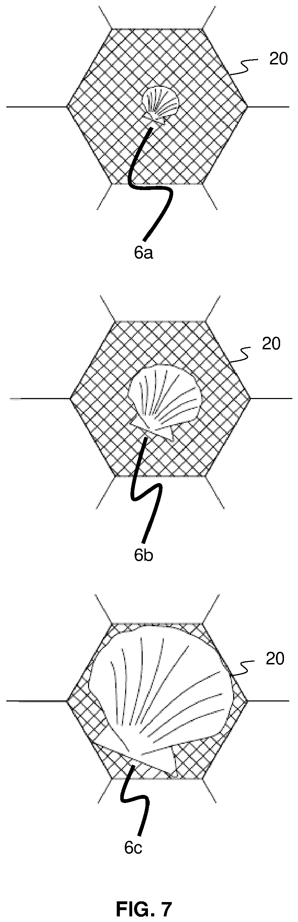

In a preferred embodiment, and without limiting the scope of protection, each of the cells accommodates an individual mollusk, in this case a scallop, as observed in FIG. 7.

The amount of time that it is farmed, as well as the size of each cell, is given by the size desired by the grower, for example, based on market requirements.

The manner in which said system is immersed in the sea does not limit the scope of the present invention. In a preferred embodiment, and without limiting the scope of protection, the system (4) or device (1) is held in a shallow or semisubmerged surface of the long line type, and may be attached to a dock, culture rafts, boats or other artifacts where it can be attached.

## Claims

1. A device (1) for improving the handling, growth rate and survival of farmed mollusks, **CHARACTERIZED in that** it comprises:
- a tray having a perforated surface in the form of a mesh or net (10), and a substantially rigid border placed on the perimeter of said tray; and
- a plurality of farming cells (40) positioned above said surface in the form of a mesh or net (10), wherein each cell (20) of said plurality of cells (40) is joined together contiguously to another cell (20), and each cell is sized to match the size of an individual mollusk from juvenile stage to a desired size for harvesting.

2. The device (1) according to claim 1, **CHARACTERIZED in that** the device is composed of a single piece comprising said tray in the form of a mesh or net (10) and said plurality of farming cells (40).

3. The device (1) according to claim 1, **CHARACTERIZED in that** said plurality of farming cells (40) is joined to said tray (10) by fixing means.

4. The device (1) according to claim 1, **CHARACTERIZED in that** a plurality of hollow cylinders which are axially perpendicular to the base of the tray (10) are located on the perimeter of the tray.

5. The device (1) according to claim 1, **CHARACTERIZED in that** said perforated surface in the form of a mesh or net (10) is substantially rigid.

6. The device (1) according to claim 1, **CHARACTERIZED in that** each cell (20) forming the plurality of cells (40) has substantially rigid borders.

7. The device (1) according to claim 6, **CHARACTERIZED in that** said substantially rigid borders have perforations.

8. The device (1) according to claim 1, **CHARACTERIZED in that** said plurality of cells (40) is composed of a single piece of contiguous cells.

9. The device (1) according to claim 1, **CHARACTERIZED in that** the cells (20) of said plurality of cells (40) are joined together contiguously by fixing means selected from the group consisting of synthetic glues, contact glues, screws, nails, staples, cable ties, plastic seals and welding.

10. The device (1) according to claim 3, **CHARACTERIZED in that** said fixing means that join the plurality of cells (40) to said tray (10) are selected from the group consisting of synthetic glues, contact glues, screws, nails, staples, cable ties, plastic seals and welding.

11. The device (1) according to claim 1, **CHARACTERIZED in that** the tray (10) has a geometry that is selected from the group consisting of circle, triangle, square, pentagon, hexagon, heptagon, octagon, decagon.

12. The device (1) according to claim 1, **CHARACTERIZED in that** each cell (20) comprising the plurality of cells (40) has a geometry that is selected from the group consisting of circle, triangle, square, pentagon, hexagon, heptagon, octagon, decagon, or a combination thereof.

13. The device (1) according to claims 11 and 12, **CHARACTERIZED in that** the tray (10) and each cell (20) comprising the plurality of cells (40) have the same geometry, said geometry being selected from the group consisting of circle, triangle, square, pentagon, hexagon, heptagon, octagon, decagon.

14. The device (1) according to claim 13, **CHARACTERIZED in that** the tray (10) and each cell (20) comprising the plurality of cells (40) have hexagon geometry.

15. The device (1) according to any of the claims 1 to 14, **CHARACTERIZED in that** the mollusk belongs to the family *Pectinidae.*

16. The device (1) according to claim 15, **CHARACTERIZED in that** the mollusk is a scallop.

17. A system for improving the handling, growth rate and survival of farmed mollusks (4), comprising a plurality of devices (1) for farming mollusks, according to claims 1 to 16, **CHARACTERIZED in that**:
- each of said devices (1) is arranged one above the other, forming a plurality of devices stacked one on top of the other (50); and
- wherein said system additionally comprises anchoring means (30) for joining together each of the devices (1).

18. The system (4) according to claim 17, **CHARACTERIZED in that** said anchoring means (30) are filiform elements.

19. The system (4) according to claim 17, **CHARACTERIZED in that** said anchoring means (30) cross each and every one of the stacked devices (50).

20. The system (4) according to claim 17, **CHARACTERIZED in that** said anchoring means (30) cross the stacked devices (50) through a plurality of hollow cylinders that are axially perpendicular to the base of the tray of each of the devices and which are located on the inner perimeter of the tray of each of the devices.

21. The system (4) according to any one of claims 17 to 20, **CHARACTERIZED in that** said anchoring means (30) are grouped and tied up at the top of the system (4).

22. The system (4) according to claims 17 to 21, **CHARACTERIZED in that** the mollusk belongs to the family *Pectinidae.*

23. The system (4) according to claim 22, **CHARACTERIZED in that** the mollusk is a scallop.

24. A method for improving the handling, growth rate and survival of farmed mollusks, which includes providing a device (1) for farming mollusks according to any one of claims 1 to 16 or a system for farming mollusks (4) according to any one of claims 17 to 23, **CHARACTERIZED in that** it comprises:
- placing an individual mollusk inside each cell of the plurality of farming cells (40);
- immersing the device (1) or the system (4) with the mollusks in the sea; and
- allowing the mollusks to grow until they reach harvest size.

25. The method according to claim 24, **CHARACTERIZED in that** it comprises harvesting the mollusk from each cell of the plurality of cells (40) once the mollusk reaches the appropriate size.

26. The method according to claims 24 or 25, **CHARACTERIZED in that** the mollusk belongs to the family *Pectinidae.*

27. The method according to claim 26, **CHARACTERIZED in that** the mollusk is a scallop.
